**Europäisches Patentamt**

**European Patent Office**

**Office européen des brevets**

(19)

(11) Veröffentlichungsnummer: **0 033 487**
**B1**

(12)

# EUROPÄISCHE PATENTSCHRIFT

(45) Veröffentlichungstag der Patentschrift:
29.06.83

(51) Int. Cl.³: **G 21 C 11/08, F 16 L 59/02**

(21) Anmeldenummer: **81100463.9**

(22) Anmeldetag: **22.01.81**

(54) **Ganzmetall-Wärmedämmung, bestehend aus aneinanderfügbaren Wärmedämm-Bausteinen.**

(30) Priorität: **01.02.80 DE 3003708**

(43) Veröffentlichungstag der Anmeldung:
**12.08.81 Patentblatt 81/32**

(45) Bekanntmachung des Hinweises auf die Patenterteilung:
**29.06.83 Patentblatt 83/26**

(84) Benannte Vertragsstaaten:
**AT BE CH DE FR GB IT LI LU NL SE**

(56) Entgegenhaltungen:
**DE-A-2 007 289**
**DE-A-2 406 604**
**DE-A-2 521 136**
**DE-A-2 530 546**
**DE-A-2 632 467**
**DE-A-2 638 165**
**DE-A-2 729 453**
**DE-A-2 734 348**

(73) Patentinhaber: **KRAFTWERK UNION AKTIENGESELLSCHAFT, Wiesenstrasse 35, D-4330 Mülheim (Ruhr) (DE)**
Patentinhaber: **Grünzweig + Hartmann Montage GmbH, Westendstrasse 17, D-6700 Ludwigshafen/Rhein (DE)**

(72) Erfinder: **Fricker, Wolfgang-Peter, An der Quelle 23, D-6713 Freinsheim (DE)**
Erfinder: **Scholz, Manfred, Zeiss-Strasse 8, D-8520 Erlangen (DE)**

(74) Vertreter: **Mehl, Ernst, Dipl.-Ing., Postfach 22 01 76, D-8000 München 22 (DE)**

Ganzmetall-Wärmedämmung, bestehend aus aneinanderfügbaren Wärmedämm-Bausteinen

Die Erfindung bezieht sich auf eine Ganzmetall-Wärmedämmung, bestehend aus aneinanderfügbaren Wärmedämm-Bausteinen, gemäss Oberbegriff des Anspruchs 1.

Eine solche Ganzmetall-Wärmedämmung ist durch die Patentschriften DE-A Nrn. 2734348 und 2729453 bekannt. Durch diese bekannten Ganzmetall-Wärmedämmungen ist bereits die Aufgabe gelöst, die sogenannte innere Konvektion innerhalb des Wärmedämm-Bausteins zu minimieren und trotzdem eine Wärmebeweglichkeit der einzelnen Dämmfolien innerhalb des Bausteins zu gewährleisten, so dass auf diese Weise Verwerfungen der Metallfolien und der Gehäusewände der Wärmedämm-Bausteine weitgehend vermieden sind. Solche Verwerfungen führen nämlich zu unerwünschten Konvektionsspalten und damit zu einer Vergrösserung der Wärmeverluste. Die bekannten Ganzmetall-Wärmedämmungen sind denn auch mit gutem Erfolg zur Wärmedämmung bei Kernreaktoranlagen, insbesondere von Kernreaktordruckbehältern, eingesetzt worden. Wenn in diesem Anwendungsfalle vom Betreiber die Auflage erteilt wird, dass die Wärmedämmung auch ohne Beeinträchtigung ihrer guten Dämmeigenschaften flutbar sein soll, so können die Wärmedämm-Bausteine als wasserdicht gekapselte Kassetten ausgebildet sein, deren Gehäusebleche aus austenitischem Stahl bestehen, welcher korrosionsbeständig ist. Ein solcher Flutungsfall kann zum Beispiel bei einem Brennelementwechsel auftreten, bei dem die Reaktorgrube geflutet wird. Normalerweise ist der Ringraum zwischen dem Reaktordruckbehälter und dem biologischen Innenschild, wo also die Wärmedämmung angeordnet ist, durch Flutkompensatoren gegen den gefluteten Reaktorraum abgedichtet. Es kann aber bei einem unerwünschten Störfall ein Leck an den Flutkompensatoren eintreten, und in diesem Falle ist die Wasser- und Korrosionsresistenz der Wärmedämmung von Vorteil, weil sie dann nach Beseitigung des eingedrungenen Flutwassers weiter verwendet werden kann.

Der vorliegenden Erfindung liegt nun die Aufgabe zugrunde, die bekannten Ganzmetall-Wärmedämmungen in der Richtung zu verbessern, dass sie in ihrer Herstellung noch preisgünstiger und in ihrer Anwendbarkeit noch vielseitiger gestaltbar sind. Das heisst insbesondere, dass die Wärmedämm-Bausteine nach der Erfindung sowohl zur Wärmedämmung von Komponenten mit ebenen bzw. schwach gekrümmten Aussenflächen geeignet sein sollen als auch ohne grundsätzliche Änderung der Konstruktion zur Wärmedämmung von Komponenten mit kleinerem Krümmungsradius ihrer Aussenwände und von Rohrleitungen. Zusammengefasst soll die neue Wärmedämmung insbesondere den folgenden Anforderungen genügen:

a) Aufnahme der Wärmedehnung der einzelnen Dämmfolien;

b) Vermeidung von Verwerfungen der Folien und damit von Veränderungen der Abstände zwischen den einzelnen Dämmfolien, Vermeidung von Verwerfungen der Gehäusebleche der Dämmbausteine;

c) Erhöhung des Wärmedämmvermögens der Ganzmetallisolierung durch exakte Einhaltung der Dämmfolienabstände;

d) sichere Vermeidung von Beschädigungen der Dämmfolien;

e) Vereinfachung der Fertigung durch Zulassung von grösseren Toleranzen beim Folienab- bzw. -zuschnitt, und

f) Vermeidung jeglicher Konvektion innerhalb der Wärmedämm-Bausteine.

Erfindungsgemäss wird die gestellte Aufgabe bei einer Ganzmetall-Wärmedämmung der eingangs genannten Art durch die im Kennzeichen des Anspruchs 1 angegebenen Merkmale gelöst. Vorteilhafte Weiterbildungen sind in den Unteransprüchen beschrieben. Die mit der Erfindung erzielbaren Vorteile sind vor allem darin zu sehen, dass der Aufbau der Wärmedämm-Bausteine erheblich vereinfacht ist. Die U-Profilleisten können aus Stangenmaterial abgelängt werden; sie werden bei der Fertigung der Bausteine vorzugsweise an den Gehäuseblechen durch Punktschweissung befestigt (angepunktet), dann wird eine Dämmfolie aufgelegt und mit der nächsten U-Profilleiste fest auf die darunter liegende U-Profilleiste aufgedrückt. Die Anpressung erfolgt durch Lehren, so dass eine 100%ige Massgenauigkeit erzielt wird. Beim Einbau der Dämmfolien wird darauf geachtet, dass sie einen Abstand von ca. 10 mm zu den Gehäusestirnblechen haben und sich so bei Wärmeeinwirkung nach allen Seiten ungehindert dehnen können. Durch die feste Anpressung wird mit Sicherheit eine umkehrende Konvektion innerhalb der Wärmedämm-Bausteine von Folienlage zu Folienlage vermieden. Durch die vorgegebene Zirkadistanz zu den Gehäusestirnblechen entfällt ein absolut genauer Masszuschnitt, was vor allen Dingen bei gewölbten Dämmfolien, die von Lage zu Lage unterschiedliche Zuschnitte aufweisen müssen, eine erhebliche Arbeitsvereinfachung mit sich bringt.

Im folgenden wird anhand der mehrere Ausführungsbeispiele darstellenden Zeichnung die Erfindung noch näher erläutert. Es zeigen in schematischer Darstellung unter Fortlassung der für das Verständnis der Erfindung nicht erforderlichen Teile:

Fig. 1 perspektivisch einen halbschalenförmigen Wärmedämm-Baustein, der mit einem entsprechend ausgebildeten zweiten halbschalenförmigen Wärmedämm-Baustein zur Isolierung einer Rohrleitung dient;

Fig. 2 zum Teil im Schnitt nach der Linie II-II aus Fig. 1, zum Teil in Ansicht den Wärmedämm-Baustein nach Fig. 1;

Fig. 3 die Einzelheit Z aus Fig. 2;

Fig. 4 perspektivisch im Ausschnitt ein zweites Ausführungsbeispiel mit einem quaderförmigen Wärmedämm-Baustein;

Fig. 5 die Seitenansicht A nach Fig. 4;

Fig. 6 die Draufsicht B nach Fig. 4;

Fig. 7 im Ausschnitt zwei aneinanderstossende Wärmedämm-Bausteine nach Fig. 4 bis 6, welche an den Stossflächen offen sind und mit ihren Dämmfolien einander überlappen;

Fig. 8 ein drittes Ausführungsbeispiel in zum Teil weggebrochener Darstellung, bei dem abweichend von demjenigen nach Fig. 4 bis 6 die Dämmfolien nicht nur an drei Seiten, sondern an allen vier Seiten mit Schiebesitz in den Aufnahmetaschen gehalten sind;

Fig. 9 den Grundriss der Anordnung nach Fig. 8 bei abgenommenem deckseitigen Gehäuseblech;

Fig. 10 die Seitenansicht C nach Fig. 9;

Fig. 11 im Ausschnitt perspektivisch zwei ineinander zu schiebende U-Profilleisten, die sich in ihrem Eckenbereich überlappen;

Fig. 12 die Einzelheit X aus Fig. 8, vergrössert;

Fig. 13 die Einzelheit Y aus Fig. 8, vergrössert;

Fig. 14 perspektivisch einen Schnellspannverschluss für die Ausführung nach Fig. 1, und

Fig. 15 und 16 im Querschnitt zwei abgewandelte Ausführungen für die U-Profilleisten.

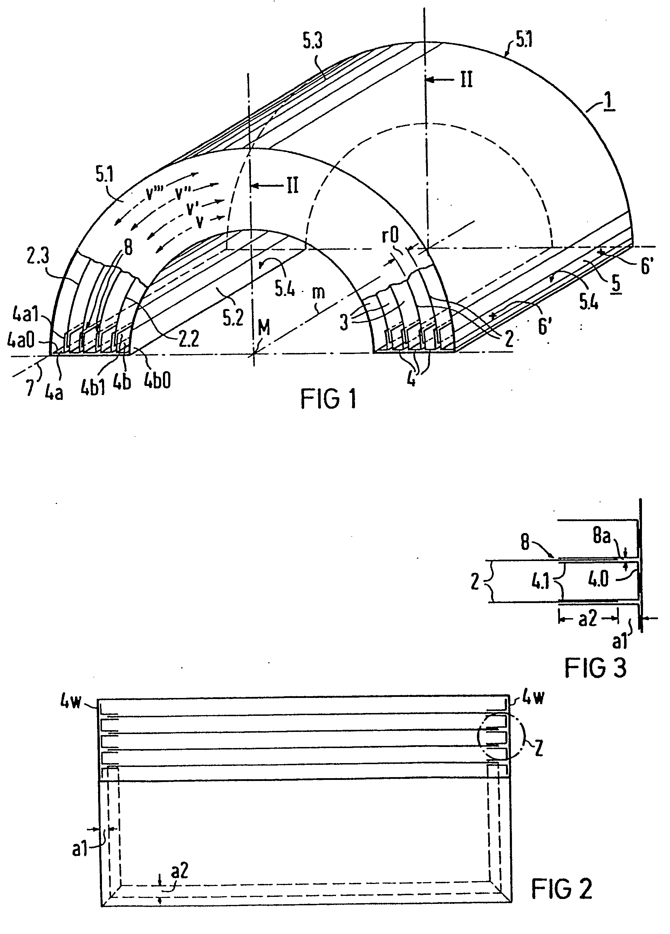

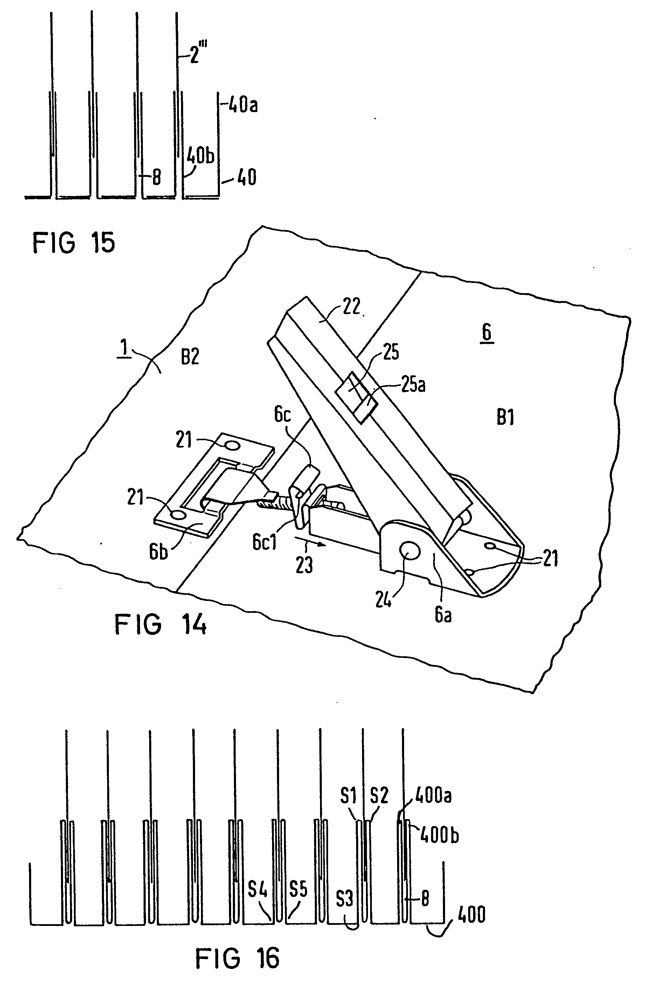

Der aus Fig. 1 ersichtliche Wärmedämm-Baustein 1 (im folgenden vereinfachend als Baustein bezeichnet) weist zueinander beabstandete, wärmebeweglich gelagerte metallische Dämmfolien 2 zur Bildung dazwischenliegender Dämmzellen 3 auf. Die Dämmfolien 2 werden zueinander im Abstand r0 gehalten durch Abstandshalteelemente 4. Letztere und damit die Dämmfolien 2 werden getragen durch die Dämmfolien 2 und Abstandshalteelemente 4 zumindest teilweise umfassende Gehäusebleche, die als Ganzes mit 5 bezeichnet sind und aus Stirnblechen 5.1 sowie einem inneren Mantelblech 5.2 und einem äusseren Mantelblech 5.3 bestehen, ferner aus Blechen 5.4 an den Stossflächen. Der Baustein 1 dient zur wärmedämmenden Ummantelung einer nicht dargestellten Rohrleitung, wobei ein entsprechend ausgebildeter Gegenbaustein die Rohrleitung von unten umfasst und mit dem dargestellten Baustein 1 auf geeignete Weise zusammengespannt ist. Zum Zusammenspannen kann zum Beispiel ein selbstsichernder Kniehebel-Schnellspannverschluss 6 verwendet sein, der aus Fig. 14 perspektivisch näher ersichtlich ist und dessen Spannverschluss 6a bzw. Gegenhaken 6b an den durch kleine Kreuze markierten Stellen 6' des Bausteins 1 an dessen Aussenblechmantel 5.3 befestigt sein können. Der nicht dargestellte Gegenbaustein würde dann die Gegenhaken 6b bzw. die Spannverschlüsse 6a aufweisen. Wenn der dargestellte Baustein 1 im Bereich der Mantellinie 7 zusammen mit dem nicht dargestellten Gegenbaustein ein Scharnier aufweisen würde, so würden die Schnellspannverschlüsse an den Stellen 6' genügen, andernfalls müssten weitere Schnellspannverschlüsse spiegelbildlich zu den dargestellten Stellen 6' am Baustein 1 und seinem Gegenbaustein angebracht sein.

Die nicht dargestellte, durch den Baustein 1 und seinen Gegenbaustein zu isolierende Rohrleitung kann insbesondere eine Primärkreisrohrleitung eines Druckwasser-Kernkraftwerkes sein. Es kann auch eine zylindrische Primärkreiskomponente, zum Beispiel ein Druckhalter, sein. Grundsätzlich liessen sich die Wärmedämm-Bausteine nach der Erfindung jedoch auch für andere Rohrleitungen oder Komponenten, zum Beispiel in konventionellen Dampfkraftwerken, verwenden, und zwar überall dort, wo auf eine hochwertige Wärmeisolierung Wert gelegt wird.

Erfindungsgemäss bestehen nun die Abstandshalteelemente 4 des Bausteins 1 aus U-Profilleisten 4, deren Schenkelverbindungssteg jeweils mit 4.0 und deren Schenkel mit 4.1 bezeichnet sind (vgl. auch Fig. 2 und 3). Ausserhalb der äussersten Dämmfolie 2.3 und innerhalb der innersten Dämmfolie 2.2 sind U-Profilleisten nicht unbedingt erforderlich, hier genügen Winkelprofilleisten 4a (aussen) und 4b (innen), deren radial verlaufende Schenkel mit 4a0 bzw. 4b0 und deren tangential verlaufende Schenkel mit 4a1 bzw. 4b1 bezeichnet sind. Im Bereich der axialen Teilfugen bzw. Stossflächen sind die schon erwähnten Trennfugenbleche 5.4 von Rechteckform angeordnet, die mit den Mantelblechen 5.2, 5.3 und den Stirnblechen 5.1 auf geeignete (nicht näher dargestellte) Weise verschweisst sind. Sie erhöhen die Steifigkeit des Bausteins.

Wie es Fig. 1 zeigt, sind an den Gehäuseblechen 5.4 die U-Profilleisten 4 und auch die Winkelleisten 4a, 4b benachbart und mit einem mindestens Dämmfolienstärke betragenden Abstand zueinander so befestigt, dass Aufnahmetaschen 8 für die Dämmfolien 2 gebildet sind. Fig. 2 in Verbindung mit Fig. 3 zeigt, dass entsprechende U-Profilleisten 4 und Winkelleisten 4w auch an den Stirnblechen 5.1 von innen halbkreisförmig umlaufend angeschweisst sind, wobei der mindestens Dämmfolienstärke betragende Abstand zur Bildung der Aufnahmetaschen 8 in Fig. 3 mit 8a bezeichnet ist. Die Dämmfolien 2 sind also beim Ausführungsbeispiel nach Fig. 1 bis 3 an all ihren vier Seiten in den Aufnahmetaschen 8 mit Schiebesitz gehalten. Sie sind zu diesem Zweck kürzer als die in Richtung der Dämmfolien 2 verlaufende jeweilige Verbindungslinie v, v', v'', v''' zwischen den beiden Trennfugenblechen 5.4, wobei die Verbindungslinien Kreisbögen sind und entsprechend dem Abstand ihrer Radien vom Mittelpunkt M bzw. der gedachten Rohr- bzw. Komponentenachse m in ihrer Länge von aussen nach innen abnehmen. Die Dämmfolien 2 sind also in ihrer tangentialen Länge entsprechend unterschiedlich gross; sie sind um zwei mal a1 kürzer als die jeweiligen Verbindungslinien v, v' usw. (s. Fig. 3). Fig. 3 zeigt auch, dass zwischen den Schenkeln 4.1 der U-Profilleisten und den Enden der Dämmfolien 2 Überlappungsstrecken a2 vorgesehen sind. Entsprechende Überlappungsstrecken a2 ergeben sich zwischen den Schenkeln 4a1 und 4b1 der Winkelleisten 4a, 4b und den anliegenden Dämmfolien 2.

Die Dämmfolien 2 liegen, wie ersichtlich, etwa auf konzentrischen Zylindermantelflächen. Sie bestehen aus dünnen austenitischen Blechen von zum Beispiel 0,2 bis 0,3 mm Stärke. Die Gehäusebleche 5 dagegen sind stärker, ihre Wandstärke beträgt zum Beispiel 0,5 bis 1 mm.

Die Gehäusebleche 5 sind gleichfalls vorzugsweise austenitisch. Die Dämmfolien sind mithin an allen ihren vier Seiten wärmebeweglich innerhalb der Aufnahmetaschen 8 gefasst; sie können sich frei dehnen und zusammenziehen. Somit ergeben sich keine Verwerfungen, und die Abstände zwischen den Dämmfolien 2 in Dämmrichtung (welche der Radialrichtung entspricht) bleiben praktisch konstant.

Gemäss einer abgewandelten Ausführung des Ausführungsbeispiels nach Fig. 1 bis 3 könnten die Bausteine 1 an ihren Stirnseiten auch offen ausgeführt sein, d.h. die Stirnbleche 5.1 würden entfallen. In diesem Falle könnten die Dämmfolien in Richtung der Achse m ein geringes Stück hervorstehen, wobei sie dann mit den Dämmfolien des axial benachbarten Bausteins überlappend unter Bildung einer Lamellendichtung montiert werden können. Für den Anwendungsfall der Wärmedämmung von Rohrleitungen im Primärkreis eines Druckwasserreaktors sind die Bausteine 1 bevorzugt jedoch allseitig mittels der Gehäusebleche 5 geschlossen, bilden also gasdicht gekapselte Kassetten, in welche — wie eingangs erwähnt — Reaktorflutwasser nicht eintreten kann.

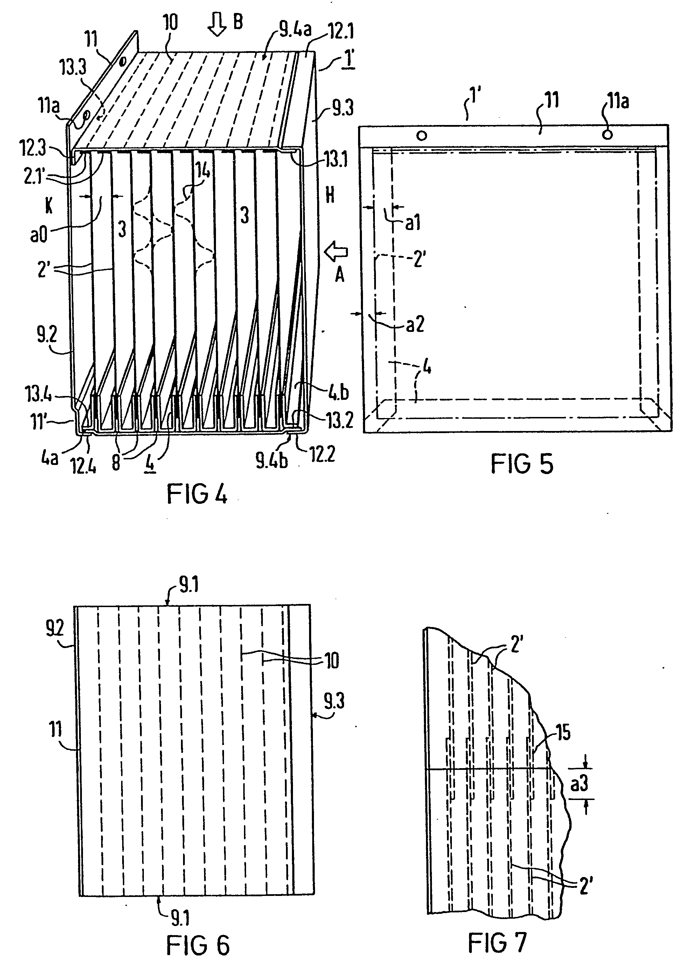

Beim zweiten Ausführungsbeispiel nach Fig. 4 bis 6 sind die Wärmedämm-Bausteine 1' im wesentlichen quaderförmige Körper, wobei die Dämmfolien 2' etwa planparallel zueinander mit einem gegenseitigen Abstand a0 verlaufen. Die Dämmzellen sind wieder mit 3 bezeichnet. Die Dämmfolien 2' sind (s. insbesondere Fig. 4) jeweils mit Abkantungen 2.1' versehen und mit diesen Abkantungen am deckseitigen Gehäuseblech 9.4a durch Punktschweissen befestigt, wobei die Punktschweissungen durch gestrichelte Linien 10 angedeutet sind. Die Dämmfolien 2' sind dagegen an ihren übrigen Seiten wieder in den Aufnahmetaschen 8, welche durch die U-Profilleisten 4 und die Winkelleisten 4a, 4b gebildet werden, wärmebeweglich gefasst. Die Kontur der Dämmfolien 2' ist in Fig. 5 strichpunktiert gekennzeichnet. Es sind wiederum innerhalb der Aufnahmetaschen 8 Freiräume a2 und Überlappungsstrecken a1 vorgesehen.

In Fig. 4 ist mit H die sogenannte heisse Seite der Wärmedämmung bezeichnet und mit K die sogenannte kalte Seite. Der Baustein 1' nach Fig. 4 wird zum Beispiel mit einem überstehenden Rand 11 seines auf der kalten Seite angeordneten Gehäusebleches 9.2 am Innenumfang des biologischen Schildes eines Kernreaktor-Druckbehälters befestigt, zum Beispiel mittels Schlagbolzen angeschossen, wobei die Schlagbolzen entsprechende Bohrungen 11a des überstehenden Randes 11 durchdringen und den Rand 11 mit einem Kopf gegen den biologischen Schild halten. In diesem Falle wäre die in Fig. 4 dargestellte Lage die richtige und 9.4a das deckseitige und 9.4b das bodenseitige Gehäuseblech. Die in tangentialer Richtung weisenden Gehäuseseitenbleche sind mit 9.1 bezeichnet. In den Fig. 4 bis 6 ist der Einfachheit halber die Krümmung des biologischen Schildes nicht berücksichtigt, d.g. die Bausteine 1' sind als Quader dargestellt, obgleich sie von der kalten Seite K (grösserer Durchmesser) zur heissen Seite H (kleinerer Durchmesser) sich etwas verjüngen.

Entsprechend der überstehenden Randleiste 11 hat die Wand 9.2 des Bausteins an ihrem unteren Ende eine Eindrückung 11', in welche sich formschlüssig die Randleiste 11 des unterhalb benachbarten Bausteins einfügt. Das äussere Mantelblech 9.3, das deckseitige Gehäuseblech 9.4a sowie auch das innere Mantelblech 9.2 sind jeweils mit Abwinklungen 12.1, 12.2 sowie 12.4 versehen, mit denen sie dichtend mit entsprechenden Schweissgegenflächen 13.1, 13.2, 13.3 und 13.4 der Gehäusebleche 9.4a, 9.4b und 9.2 dichtend verschweisst sind. Die Schweissgegenflächen 13.1, 13.2 und 13.4 sind jeweils als Abkröpfungen der entsprechenden Gehäusebleche ausgebildet, damit sich mit den Abwinklungen 12.1, 12.2 und 12.4 ein nach aussen ebener bzw. bündiger Abschluss ergibt.

Bei einer grösseren Flächenausdehnung der Dämmfolien 2' kann es zweckmässig sein, diese zumindest im randfernen Mittenbereich mit reliefartigen Ausprägungen oder Wülsten 14 zu versehen, wie dies gestrichelt in Fig. 4 angedeutet ist. Diese Prägungen 14 dienen als zusätzliche Abstandshalter zur Einhaltung des genauen Abstandes der Dämmfolien 2' und damit der Dämmzellen 3. Sie behindern nicht die Wärmedehnung oder Schrumpfung der Dämmfolien 2' bei Erwärmung bzw. Abkühlung. Gemäss Fig. 4 bis 6 ist der dort dargestellte Baustein 1' gleichfalls durch seine Gehäusebleche allseitig geschlossen, d.h. als gasdicht gekapselte Kassette ausgebildet. Wo die Möglichkeit eines Eindringens von Reaktorwasser oder ein Wunsch des Betreibers nach gasdichter Kapselung nicht besteht, können die Kassetten 1' an ihren Seitenflächen 9.1 auch offen ausgebildet sein. Das hätte in bezug auf die Konvektionsdichtigkeit keine Nachteile, da sich in der Horizontalen keine Konvektionsströme ausbilden könnten. In diesem Falle könnten die Dämmfolien 2' so, wie in Fig. 7 angedeutet, über die Seitenflächen 9.1 der Bausteine 1' hinaus verlängert mit einem Überstand der Länge a3 versehen sein, wobei die tangential einander benachbarten Bausteine 1' mit ihren überstehenden Zungen 15 überlappend wärmebeweglich unter Bildung von Lamellendichtungen aneinanderliegen.

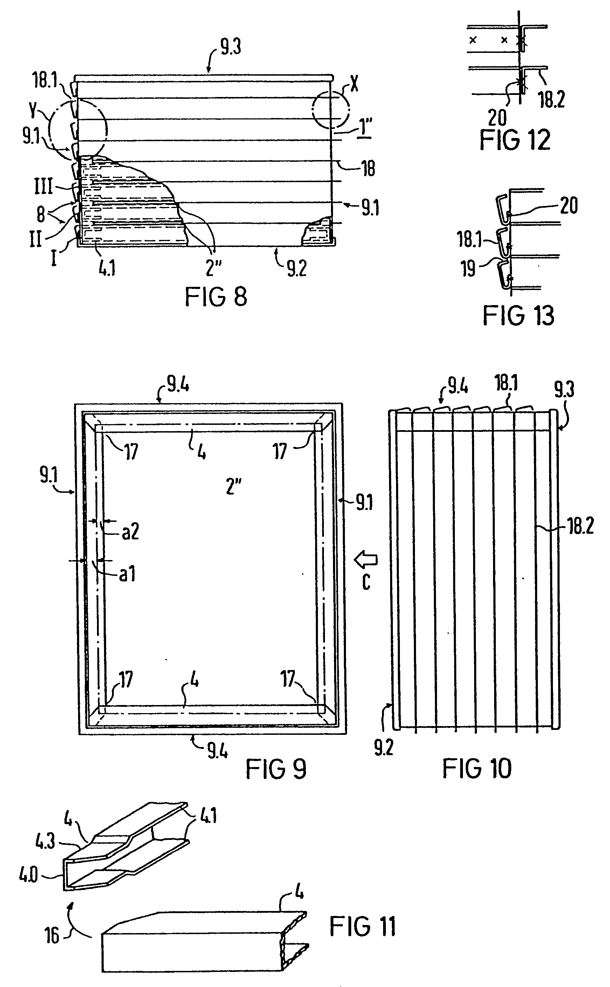

Beim dritten Ausführungsbeispiel nach Fig. 8 bis 11 handelt es sich gleichfalls um einen im wesentlichen quaderförmigen Wärmedämm-Baustein 1'', jedoch sind hier die Dämmfolien 2'' nicht nur an drei, sondern an allen vier Seiten in den zugehörigen Aufnahmetaschen 8 wärmebeweglich gefasst. Die Überlappungsstrecke zwischen den Dämmfolien 2'' und den Aufnahmetaschen 8 bzw. den Schenkel 4.1 der U-Profilleisten 4 ist wieder mit a2 bezeichnet, der Freiraum innerhalb der Aufnahme taschen 8 mit a1 (s. Fig. 9). Die vier Mantelflächen der Gehäusebleche sind mit 9.1, 9.1 und 9.4, 9.4 bezeichnet, die Grund- und Deck-

fläche mit 9.2 und 9.3. Es handelt sich, wie ersichtlich, um eine allseitig geschlossene, durch die Gehäusebleche 9 gasdicht gekapselte Wärmedämmkassete. Damit sich eine im wesentlichen ebene Auflagefläche für die Dämmfolien 2″ an den Schenkeln 4.1 der U-Profilleisten auch in ihrem Eckenbereich ergibt, ist, wie es Fig. 11 zeigt, die eine U-Profilleiste mit einem verjüngten abgekröpften Ende 4.3 versehen, über welches eine normale U-Profilleiste 4, wie es der Pfeil 16 verdeutlicht, formschlüssig fassen kann. Die Normalleisten sind in Fig. 9 die obere und untere, die mit abgekröpften Enden versehenen Leisten sind die linke und die rechte. Es ergeben sich die Überlappungsbereiche 17 an den vier Ecken. Eine entsprechende Ausbildung kann auch bei den ersten beiden Ausführungsbeispielen getroffen sein.

Der Baustein nach Fig. 8 bis 11 hat — obgleich er allseitig geschlossen ist — noch zusätzlich dünne Blechzungen 18, und zwar 18.1 und 18.2 an seinem äusseren Umfang, die dazu dienen, mit entsprechenden Gegenzungen eines anstossenden Bausteins eine wirksame Lamellendichtung zu bilden. Dabei fasst der eine Baustein mit den Blechzungen 18.2 seiner einen Seite 9.1 (s. Fig. 12) in die durch doppelt abgekantete Blechzungen 18.1 gebildete Stecktaschen 19 der anderen Seite eines benachbarten Bausteins (s. Fig. 13). Beim Aneinanderschieben der beiden Bausteine federn die abgekanteten Zungen 18.1 um ein gewisses Stück einwärts, so dass sich dadurch die Stecktaschen 19 verengen und sich so ein lamellenartig dichtender Eingriff der eingefügten Zungen 18.2 ergibt, der jedoch wärmeelastisch ist. Durch diese dichtende Verzahnung ergibt sich eine sehr wirksame konvektionsdichte Anordnung auch für den Aussenumfang der Bausteine. Wie es insbesondere Fig. 12 und 13 zeigen, sind die Lamellenzungen 18.2 und 18.1 mit rechtwinklig (Fig. 12) oder spitzwinklig (Fig. 13) abgebogenen Befestigungsschenkeln versehen, welche bei 20 jeweils an der betreffenden Gehäuseblechwand mittels Punktschweissen befestigt sind. Es ist also ersichtlich, dass dann, wenn die Bausteine 1″ zur Bildung einer Wärmedämmung in Höhen-, Seiten- oder Umfangsrichtung aneinandergereiht werden, die einander benachbarten Bausteine abwechselnd mit den messerartigen Lamellenzungen 18.2 und mit den durch doppelte Abkantung Stecktaschen 19 bildenden Lamellenzungen 18.1 federelastisch-dichtend ineinandergreifen, wobei die doppelt abgekanteten Lamellenzungen 18.1 unter einem spitzen Winkel vom jeweiligen Gehäuseblech abstehen und durch das Aneinanderfügen unter Verengung der Stecktaschen 19 einwärts federelastisch deformierbar sind. Hierzu sind die Abstände für die messerartigen Lamellenzungen 18.2 untereinander und für die doppelt abgekanteten Lamellenzungen 18.1 untereinander nach einem vorgegebenen Raster bemessen.

Für den Fall, dass die Bausteine nach Fig. 8 bis 11 sowie 13 und 14 zur Wärmedämmung eines Reaktordruckbehälters oder einer anderen eine entsprechende Höhenerstreckung aufweisenden Komponente verwendet werden sollen, versteht es sich, dass sie mit entsprechenden Aufhängleisten 11 (vgl. Fig. 4 bis 6) versehen werden können.

Die Herstellung der Bausteine sei anhand der Fig. 8 erläutert. Hierzu sei angenommen, dass ein Blechkasten ohne die Deckfläche 9.3 bereits vorliegt. Dann wird ein erster U-Profilleisten-Rahmen I eingelegt und an den Mantelblechen 9.1, 9.4 mit seinem umlaufenden Steg 4.0 (s. Fig. 11) angepunktet (durch Punktschweissen befestigt). Hierauf wird eine erste Dämmfolie 2″ auf die durch den Rahmen gebildete Auflageflächen aufgelegt und mit einem nächsten U-Profilleisten-Rahmen II auf den darunter liegenden ersten Rahmen I aufgedrückt. Im aufgedrückt gehaltenen Zustand wird der Rahmen II wieder an den Gehäusemantelblechen 9.1, 9.4 festgeschweisst, hierauf kann die nächste Dämmfolie 2″ aufgelegt werden und mit dem dritten Rahmen III aufgedrückt gehalten werden usw., bis der vollständige U-Profilleisten-Stapel bzw. Rahmenstapel und Dämmfolienstapel in dem Gehäuseblechkasten untergebracht sind, worauf dann das Gehäusedeckblech 9.3 aufgelegt und festgeschweisst wird. Wenn vorstehend von U-Profilleisten die Rede war, so versteht es sich, dass im Falle der Ausführungsbeispiele nach Fig. 1 bis 3 sowie nach Fig. 4 bis 6 die im Stapel jeweils oberste und unterste Profilleiste auch als Winkelleiste ausgebildet sein kann.

Zurückkommend auf Fig. 14 ist noch nachzutragen, dass der dort dargestellte Schnellspannverschluss 6 wegen der geforderten Gasdichtheit der Bausteine nicht mittels Blechtreibschrauben, sondern mittels Schweissstellen 21 an den Gehäuseblechen zu befestigen ist, d.h. sein Gegenhaken 6b und sein Spannverschluss 6a. Durch das nicht näher dargestellte Kniehebelgelenk wird bewirkt, dass die Federklemme 6c bei der Schliessbewegung des Kniehebels 22 in Richtung des Pfeiles 23 auf die Gelenkachse 24 verschoben und damit das Gehäuseblech B1 gegen das Gehäuseblech B2 gezogen wird. Am Schluss der Spannbewegung rastet die Federklemme 6c mit ihrer Nase 6c1 hinter die Kante 25a der Rastaussparung 25 des Kniehebels 22.

Unter U-Profilleisten im Sinne der Erfindung werden allgemein U-förmig ausgebildete Abstandshalteelemente verstanden, welche zwischen einander unmittelbar benachbarten Schenkeln die Aufnahmetaschen 8 für die Dämmfolien begrenzen. Solche U-Profilleisten im Sinne der Erfindung können deshalb auch durch Zusammensetzung von einen L-förmigen Querschnitt aufweisenden Blechen oder entsprechenden L-Profilleisten zusammengesetzt sein oder sie können durch mäanderförmiges Biegen von entsprechend dünnerem Blech als Mehrfach-U-Profilleisten ausgeführt sein.

Fig. 15 zeigt Abstandshalteelemente 40, deren U-Profil durch Zusammensetzen von zwei L-Profilleisten 40a, 40b gebildet ist. Die Aufnahmetaschen 8 sind wiederum mit 8, die Dämmfolien mit 2‴ bezeichnet.

Fig. 16 zeigt im Querschnitt eine Mehrfach-U-Profilleiste 400, welche als ein mäanderförmig gebogenes Profilband ausgeführt ist, dessen die Aufnahmetaschen 8 begrenzende U-Schenkel 400a, 400b durch im Querschnitt haarnadelförmig gebogene Fortsätze gebildet sind. Pro Aufnahmekanal 8 ist also eine dreifach gewundene Schleife mit den beiden äusseren abgerundeten Schleifenumkehrpunkten S1, S2 und mit dem mittigen, am Grunde des Aufnahmekanals 8 angeordneten abgerundeten Schleifenumkehrpunkt S3 gebildet. Rechnet man die winkligen Abbiegungen S4 und S5 am Beginn und am Ende der jeweiligen Dreifachschleife hinzu, so ergeben sich pro Aufnahmekanal 8 insgesamt fünf Abbiegungen. Dies hat den Vorteil, dass trotz Verwendung eines relativ dünnen Bleches eine hohe Formstabilität des Abstandshalteelementes sowie damit auch eine einfache Herstellung und Montage erzielt werden kann.

## Patentansprüche

1. Ganzmetall-Wärmedämmung, bestehend aus aneinanderfügbaren Wärmedämm-Bausteinen, letztere jeweils aufweisend zueinander beabstandete, wärmebeweglich gelagerte metallische Dämmfolien zur Bildung dazwischenliegender Dämmzellen, die Dämmfolien im Abstand zueinander haltende Abstandshalteelemente und die Dämmfolien und Abstandshalteelemente tragende und mindestens teilweise umfassende Gehäusebleche, dadurch gekennzeichnet, dass die Abstandshalteelemente eines jeden Bausteins (1, 1', 1'') aus U-Profilleisten (4) oder Winkelleisten (4a, 4b) bestehen, die benachbart und mit einem mindestens Dämmfolienstärke betragenden Abstand (8a) zueinander so an mindestens einem Gehäuseblech (5, 9) befestigt sind, dass Aufnahmetaschen (8) für die Dämmfolien (2, 2', 2'') gebildet sind, dass pro Baustein (1, 1', 1'') mindestens zwei in definierter Relation zueinander gehaltene Gehäusebleche vorgesehen sind, von denen wenigstens das eine die Aufnahmetaschen (8) aufweist, und dass in den Aufnahmetaschen (8) die Dämmfolien (2, 2', 2'') des jeweiligen Bausteins (1, 1', 1'') an wenigstens einer ihrer Enden mit Schiebesitz gehalten und zu diesem Zweck kürzer als die in Dämmfolienrichtung verlaufende Verbindungslinie (v, v', v'', v''') der beiden vorgenannten Gehäusebleche bemessen sind.

2. Wärmedämmung nach Anspruch 1, dadurch gekennzeichnet, dass die Wärmedämm-Bausteine (1, 1', 1'') als allseitig geschlossene, insbesondere gasdicht gekapselte Kassetten ausgebildet sind.

3. Wärmedämmung nach einem der beiden Ansprüche 1 oder 2, dadurch gekennzeichnet, dass die Wärmedämm-Bausteine (1, 1', 1'') zur Ummantelung von etwa kreiszylinderförmigen Komponenten oder Rohrleitungen einen kreissegmentförmigen Querschnitt aufweisen, wobei die zylindrisch gekrümmten Dämmfolien (2) etwa auf konzentrischen Zylindermantelflächen liegen.

4. Wärmedämmung nach Anspruch 3, insbesondere zur Ummantelung von Rohrleitungen, dadurch gekennzeichnet, dass die Wärmedämm-Bausteine (1) Halbschalenkörper sind.

5. Wärmedämmung nach einem der beiden Ansprüche 1 oder 2, dadurch gekennzeichnet, dass die Wärmedämm-Bausteine (1', 1'') etwa quaderförmige Körper sind, wobei die Dämmfolien (2', 2'') etwa planparallel zueinander verlaufen.

6. Wärmedämmung nach einem der Ansprüche 1 bis 5, dadurch gekennzeichnet, dass rechteckige Dämmfolien (2'') der Wärmedämm-Bausteine (1'') an allen vier Seiten in zugehörigen Aufnahmetaschen (8) wärmebeweglich gefasst sind.

7. Wärmedämmung nach einem der Ansprüche 1 bis 5, dadurch gekennzeichnet, dass rechteckige Dämmfolien (2') der Wärmedämm-Bausteine (1') an einer Seite abgekantet und mit der Abkantung (2.1') an einem Gehäuseblech (9.4a) festgeschweisst sind, dagegen an den übrigen Seiten in den Aufnahmetaschen (8) wärmebeweglich gefasst sind.

8. Wärmedämmung nach einem der Ansprüche 1 sowei 3 bis 7, dadurch gekennzeichnet, dass die Wärmedämm-Bausteine (1') an ihren in Umfangsrichtung des zu dämmenden Bauteils weisenden, aneinanderstossenden Seitenflächen (9.1) offen ausgebildet und mit hervorkragenden Enden (15) ihrer Dämmfolien (2') überlappend aneinanderfügbar sind.

9. Wärmedämmung nach einem der Ansprüche 1 bis 8, dadurch gekennzeichnet, dass zumindest im randfernen Mittenbereich der Dämmfolien (2') diese mit Prägungen (14) als zusätzliche Abstandshalter versehen sind.

10. Wärmedämmung nach einem der Ansprüche 1 bis 9, dadurch gekennzeichnet, dass einander benachbarte Wärmedämm-Bausteine (1'') abwechselnd mit messerartigen Lamellenzungen (18.2) und mit durch doppelte Abkantung Stecktaschen (19) bildenden Lamellenzungen (18.1) federelastisch-dichtend ineinandergreifen, wobei die doppelt abgekanteten Lamellenzungen (18.1) unter einem spitzen Winkel vom jeweiligen Gehäuseblech abstehen und durch das Aneinanderfügen unter Verengung der Stecktaschen (19) einwärts federelastisch deformierbar sind.

11. Wärmedämmung nach einem der Ansprüche 1 bis 10, dadurch gekennzeichnet, dass die U-Profilleisten aus L-Profilleisten mit vorzugsweise geringerer Wandstärke als die U-Profilleisten zusammengesetzt sind.

12. Wärmedämmung nach einem der Ansprüche 1 bis 11, gekennzeichnet durch eine Mehrfach-U-Profilleiste, welche als ein mäanderförmig gebogenes Prifilband ausgeführt ist, dessen die Aufnahmetaschen begrenzende U-Schenkel durch im Querschnitt haarnadelförmig gebogene Fortsätze gebildet sind.

## Claims

1. All-metal thermal insulation consisting of thermal insulation modules which can be attached to one another, the latter respectively having metallic insulating foils spaced from one another and mounted so as to be heat-movable so as to form interlying insulating cells, spacer elements maintaining the insulating foils at a distance from one another, and metal housing plates carrying and at least partially gripping the insulating foils and spacer elements, characterised in that the spacer elements of each module (1, 1', 1'') consist of U-profile strips (4) or angled strips (4a, 4b) which are attached to at least one metal housing plate (5, 9), adjacent to one another and spaced by an interval (8a) which amounts at least to the thickness of the insulating foil, in such manner as to form accomodation pockets (8) for the insulating foils (2, 2', 2''), that in respect of each module (1, 1', 1'') there are provided at least two metal housing plates which are maintained in a determinate relationship to one another, at least one of which has the accomodation pockets (8), and that in the accomodation pockets (8) the insulating foils (2, 2', 2'') of the relevant module (1, 1', 1'') are slide-fit mounted at at least one of their ends, and for this purpose are designed to be shorter than the connecting line (v, v', v'', v''') running in the direction of the insulating foil, between the two aforementioned metal housing plates.

2. Thermal insulation means as claimed in claim 1, characterised in that the thermal insulation modules (1, 1', 1'') are designed as cassettes which are closed all around, in particular enclosed so as to be gastight.

3. Thermal insulation as claimed in claim 1 or 2, characterised in that, in order to encase components or pipelines which approximately have the shape of a circular cylinder, the thermal insulation modules (1, 1', 1'') possess a cross-section which has the form of a circular segment, where the cylindrically bent insulating foils (2) approximately lie on concentric surfaces of the cylinder jacket.

4. Thermal insulation as claimed in claim 3, in particular for sheathing pipelines, characterised in that the thermal insulation modules (1) are semi-shell bodies.

5. Thermal insulation as claimed in claim 1 or 2, characterised in that the thermal insulation modules (1', 1'') are bodies which approximately have the form of a parallelepiped, where the insulating foils (2', 2'') run plane-parallel with one another.

6. Thermal insulation as claimed in one of claims 1 to 5, characterised in that rectangular insulating foils (2'') of the thermal insulation modules (1'') are held in accomodation pockets (8) on all four sides so as to be heat-movable.

7. Thermal insulation as claimed in one of claims 1 to 5, characterised in that rectangular insulating foils (2') of the thermal insulation modules (1') are folded on one side and welded to a metal housing plate (9.4a) by means of the folded portion (2.1'), whereas on the other sides they are held in accomodation pockets (8) so as to be heat-movable.

8. Thermal insulation as claimed in one of claims 1 and 3 to 7, characterised in that, on their abutting side surfaces (9.1) which point in the peripheral direction of the component to be insulated, the thermal insulation modules (1') are open an attachable to one another by means of projecting ends (15) of their insulating foils (2').

9. Thermal insulation as claimed in one of claims 1 to 8, characterised in that at least in the centre region, away from the edge, of the insulating foils (2') the latter are provided with indentations (14) as additional spacer elements.

10. Thermal insulation as claimed in one of claims 1 to 9, characterised in that thermal insulating modules (1'') which are adjacent one another engage into one another to form a resiliently elastic seal alternately by means of knife-like lamellar tongues (18.2) and by means of lamellar tongues (18.1) forming, by means of double folding, plug-in pockets (19), where the double-folded lamellar tongues (18.1) project from the relevant metal housing plate at an acute angle and as a result of the joining operation, during narrowing, the plut-in type pockets (19) can be inwardly deformed in resiliently elastic fashion.

11. Thermal insulation as claimed in one of claims 1 to 10, characterised in that the U-profile strips consist of L-profile strips having a preferably smaller wall thickness than the U-profile strips.

12. Thermal insulation as claimed in one of claims 1 to 11, characterised by a multiple U-profile strip which is designed as a meander-shaped profile band whose U-members adjoining the accomodation pockets are formed by extensions which are bent so as to be hairpin-shaped in cross-section.

**Revendications**

1. Isolation thermique entièrement en métal, constituée de blocs thermiquement isolants pouvant être assemblés, présentant des feuilles isolantes métalliques écartées les unes des autres, montées mobiles sous l'action de la chaleur pour former entre elles des cellules isolantes, des éléments d'entretoisement maintenant les feuilles isolantes à distance les unes des autres et des tôles formant enveloppe portant et entourant au moins partiellement les feuilles isolantes et les éléments d'entretoisement, caractérisée en ce que les éléments d'entretoisement de chaque bloc (1, 1', 1'') sont constitués de baguettes à profil en U ou de baguettes formant cornière (4a, 4b) qui sont voisines et qui, en étant à une distance les unes des autres au moins égale à l'épaisseur des feuilles isolantes, sont fixées à au moins une tôle formant enveloppe (5, 9) de manière à former des poches de réception (8) des feuilles isolantes (2, 2', 2''), en ce que, par bloc, il est prévu au moins deux tôles formant enveloppe et maintenues l'une par rapport à l'autre en une relation définie, dont l'une au moins présente une poche de réception (8), et en ce que les feuilles isolantes (2, 2', 2'') de chaque bloc (1, 1', 1'') respectif sont maintenues au moins par l'une de leurs extrémités dans les poches de réception (8) par un ajustement appuyé et, à cet effet, sont plus courtes que les lignes de liaison (v, v', v'', v''') s'étendant suivant la direction des feuilles isolantes des deux tôles précitées formant enveloppe.

2. Isolation thermique suivant la revendication 1, caractérisée en ce que les blocs thermiquement isolants (1, 1', 1'') sont constitués en cassettes fermées de tous les côtés, notamment encapsulées d'une manière étanche au gaz.

3. Isolation thermique suivant l'une des revendications 1 ou 2, caractérisée en ce que les blocs thermiquement isolants (1, 1', 1'') présentent, pour envelopper des équipements de forme à peu près cylindrique circulaire ou de conduits tubulaires, une section droite en forme de segment de cercle, les feuilles isolantes (2) incurvées cylindriquement s'étendant à peu près suivant des surfaces latérales concentriques de cylindre.

4. Isolation thermique suivant la revendication 3, notamment pour envelopper des conduits tubulaires, caractérisée en ce que les blocs thermiquement isolants (1) sont des corps en hémi-coquille (1).

5. Isolation thermique suivant l'une des revendications 1 ou 2, caractérisée en ce que les blocs thermiquement isolants (1', 1'') sont des corps de forme sensiblement parallélépipédique, les feuilles isolantes (2', 2'') s'étendant sensiblement parallèlement entre elles suivant un plan.

6. Isolation thermique suivant l'une des revendications 1 à 5, caractérisée en ce que des feuilles isolantes (2'') rectangulaires des blocs thermiquement isolants (1'') sont prises, avec possibilité de déplacement sous l'effet de la chaleur, sur les quatre côtés, dans des poches de réception (8) qui leur sont affectées.

7. Isolation thermique suivant l'une des revendications 1 à 5, caractérisée en ce que des feuilles isolantes (2') rectangulaires des blocs thermiquement isolants (1') sont repliées d'un côté, et sont soudées rigidement par la partie repliée (2.1') sur une tôle d'enveloppe (9.4a) mais, sur les autres côtés, sont prises, avec possibilité de déplacement sous l'effet de la chaleur, dans les poches de réception (8).

8. Isolation thermique suivant l'une des revendications 1 ainsi que 3 à 7, caractérisée en ce que les blocs thermiquement isolants (1') sont ouverts sur leur surface latérale (9.1) jointive dirigée vers le pourtour de la pièce à isoler et peuvent être assemblés à chevauchement par des extrémités en saillie (15) de leur feuille isolante (2').

9. Isolation thermique suivant l'une des revendications 1 à 8, caractérisée en ce que, au moins dans une région médiane éloignée des bords des feuilles isolantes (2'), celles-ci sont munies d'empreintes (14) servant d'entretoises supplémentaires.

10. Isolation thermique suivant l'une des revendications 1 à 9, caractérisée en ce que des blocs thermiquement isolants (1'') voisins les uns des autres se prennent avec étanchéité et avec déformation élastique — alternativement par des languettes en forme de lamelle — de type en couteau (18.2) et avec des languettes en forme de lamelle (18.1) formant par double repliage des poches de fixation (19), les languettes en forme de lamelle (18.1) repliées deux fois faisant saillie et pouvant être déformées élastiquement à la manière d'un ressort vers l'intérieur lors de l'assemblage avec rétrécissement des poches de fixation (19).

11. Isolation thermique suivant l'une des revendications 1 à 10, caractérisée en ce que les baguettes profilées en forme de U sont composées de baguettes profilées en L ayant de préférence une épaisseur de paroi plus petite que les baguettes profilées en U.

12. Isolation thermique suivant l'une des revendications 1 à 11, caractérisée par une baguette profilée plusieurs fois en U, qui est réalisée sous la forme d'une bande profilée recourbée en forme de méandres, dont les branches en U délimitant les poches de réception sont formées par des prolongements repliés ayant en coupe transversale la forme d'une épingle à cheveux.

FIG 1

FIG 3

FIG 2

FIG 4

FIG 5

FIG 6

FIG 7

FIG 8

FIG 12

FIG 13

FIG 9

FIG 10

FIG 11

FIG 15

FIG 14

FIG 16